(19) **Europäisches Patentamt**

**European Patent Office**

**Office européen des brevets**

(11) Veröffentlichungsnummer: **0 327 956 B1**

(12) # EUROPÄISCHE PATENTSCHRIFT

(45) Veröffentlichungstag der Patentschrift:
18.12.91 Patentblatt 91/51

(51) Int. Cl.$^5$: **G05D 23/19, A61H 33/04**

(21) Anmeldenummer: **89101777.4**

(22) Anmeldetag: **02.02.89**

(54) **Verfahren zur Erzeugung eines elektrichen Steuersignals in einem Aufbereitungsgerät für medizinisch-therapeutische Packungsmassen.**

(30) Priorität: **06.02.88 DE 3803674**

(43) Veröffentlichungstag der Anmeldung:
**16.08.89 Patentblatt 89/33**

(45) Bekanntmachung des Hinweises auf die
Patenterteilung:
**18.12.91 Patentblatt 91/51**

(84) Benannte Vertragsstaaten:
**AT BE CH DE ES FR GB IT LI LU NL SE**

(56) Entgegenhaltungen:
**EP-A- 0 007 928**
**EP-A- 0 208 256**
**CA-A- 983 012**
**DE-A- 3 015 226**
**FR-A- 2 378 308**
**US-A- 3 994 164**

(73) Patentinhaber: **HENNEBERG & BRUNNER
Entwicklungsbüro, Goldbachstrasse 3
W-6991 Igersheim (DE)**
Patentinhaber: **CARLE GMBH + CO. KG
medizinische Geräte, Einrichtungen und
Präparate, Beim Braunstall 4
W-6990 Bad Mergentheim (DE)**

(72) Erfinder: **Brunner, Elmar
Steinstr. 9
W-6990 Bad Mergentheim (DE)**
Erfinder: **Henneberg, Fred
Steinstr. 9
W-6990 Bad Mergentheim (DE)**
Erfinder: **Müller, Edgar
Am Ring 26
W-6965 Ahorn-Schillingstadt (DE)**

(74) Vertreter: **Tergau, Enno et al
Patentanwälte Tergau & Pohl Postfach 11 93
47 Hefnersplatz 3
W-8500 Nürnberg 11 (DE)**

## Beschreibung

Die Erfindung betrifft ein Verfahren zur Erzeugung eines elektrischen Steuersignales zur Funktionssteuerung eines Aufbereitungsgerätes für medizinisch-therapeutische Packungsmassen gemäß dem Oberbegriff des Anspruches 1 sowie ein solches Aufbereitungsgerät gemäß dem Oberbegriff des Anspruches 8.

Die Anwendung medizinisch-therapeutischer Packungsmassen, wie beispielsweise fango- und paraffinhaltiger Packungsmassen ist in der Medizin als Wärmebehandlung zu Therapie- und Rehabilitationszwecken bestens bekannt. Bei Zimmertemperatur sind diese Packungsmassen in einem festen oder zumindest sehr zähflüssigen Aggregatzustand erstarrt. Zur Applikation müssen sie in entsprechenden Geräten aufbereitet werden, die in der Regel drei wichtige Grundfunktionen aufweisen :

— Schmelzen der Packungsmasse und Einregeln der Applikationstemperatur auf eine Temperatur von etwa 60 bis 70°C,

— Durchführen eines Sterilisationsprozesses nach medizinischen Vorschriften, beispielsweise Aufheizen der Packungsmasse auf eine Temperatur von 130°C und Halten dieser Temperatur für eine Zeit von etwa 15 Minuten,

— Ein- und Ausschaltsteuerung eines Rührwerkes im Kessel.

Durch eine möglichst frühzeitige Einschaltung des Rührwerkes — beispielsweise wenn erst eine dünne Grenzschicht der erstarrten Packungsmasse im Bereich der Kesselwandung geschmolzen ist — sind der Schmelzvorgang und die Einstellung der Packungsmasse auf die Applikationstemperatur drastisch verkürzbar. Um den Antriebsmotor nicht zu überlasten, darf das Rührwerk jedoch auf keinen Fall betrieben werden, wenn es durch die Packungsmasse blockiert werden könnte, also beispielsweise wenn eine vollständige Abschmelzung der Packungsmasse von der Kesselwandung noch nicht erfolgt ist oder sich die Packungsmassentemperatur von oben an die Erstarrungstemperatur annähert.

Ein grundsätzliches Problem beim Umgang mit solchen Packungsmassen erschwert die Ablaufsteuerung beim Aufheizen, Sterilisieren und für den Rührwerkbetrieb beträchtlich. Die Wärmeleitfähigkeit der verwendeten Packungsmassen (beispielsweise 0,26 W/(mK) und des in der Regel aus Aluminium bestehenden Kessels (etwa 204 W/(mK) unterscheiden sich ca. um einen Faktor 1000. Besonders während der Aufheizphase bei der Inbetriebnahme des Aufbereitungsgerätes oder während der Sterilisation entsteht damit ein sehr großes Temperaturgefälle zwischen dem geheizten Kessel und dem Kesselinhalt.

Eine Regelung und Steuerung der obengenannten Funktionen auf der Basis der eigentlichen Packungsmassen-Temperatur ist nicht möglich, da diese nicht direkt messbar ist. Dazu müßten nämlich thermisch von der Kesselwandung isolierte Temperatursensoren an verschiedenen Stellen der Packungsmasse direkt in diese hineinragen. Dann müßte jedoch die Rotation eines zwar von der Wandung in einer Grenzschicht abgeschmolzenen, zentral jedoch noch starren Packungsmassenblockes unterbleiben, weil sonst die darin hineinragenden Temperatorsensoren durch die Blockrotation zerstört werden würden. Es ist also nur möglich, die verschiedenen Regel- und Steuerfunktionen von der Kesselwandungstemperatur abzuleiten.

Bekannte Geräte und Regel- bzw. Steuerverfahren arbeiten mit verschieden eingestellten und an unterschiedlichen Orten der Kesselwandung plazierten Thermostaten, die auf konstruktiv äußerst aufwendige Weise elektrisch verdrahtet sein müssen. Die zugehörigen Regel- und Steuersignale werden üblicherweise bei Erreichen eines bestimmten Temperaturzustandes des Kessels erzeugt und gegebenenfalls über eine fest eingestellte Zeit aufrechterhalten. Beispielsweise wird die Regel- und Steuerfunktion "Sterilisation" so durchgeführt, daß der Kessel mit voller Heizleistung aufgeheizt wird, bis die Kesselwandungstemperatur die eingestelle Sterilisationstemperatur erreicht hat. Anschließend wird die Sterilisation der Packungsmasse gegebenenfalls mit reduzierter Heizleistung während einer festen Zeitspanne zu Ende geführt. Diese Zeitspanne muß deutlich länger sein, als die oben angegebene Mindeststerilisationsdauer, da die Packungsmassentemperatur der Wandungstemperatur erheblich hinterhereilt. Andererseits ist diese Nacheilung bei einem nur teilweise gefüllten Kessel wesentlich geringer als beim maximal gefüllten Kessel. Es wird deutlich, daß eine schnellere Durchführung des Sterilisationsprozesses möglich wäre, wenn die Erzeugung der entsprechenden Steuer- und Regelsignale nicht nur in Abhängigkeit der Kesselwandungstemperatur, sondern auch der Füllmenge des Kessels erzeugt werden würden.

Die vorgenannte Problematik stellt sich analog bei der Bestimmung eines möglichst frühzeitigen Einschaltzeitpunktes für das Rührwerk, welcher ebenfalls temperatur- und füllmengenabhängig ist.

Ausgehend von den vorstehend geschilderten Nachteilen bei der Funktionssteuerung von bekannten Aufbereitungsgeräten für medizinisch-therapeutische Packungsmassen liegt der Erfindung die Aufgabe zugrunde, ein Verfahren zur Erzeugung eines elektrischen Steuersignales für diese Funktionssteuerung sowie ein entsprechend verbessertes Aufbereitungsgerät anzugeben, wobei die einzelnen Gerätefunktionen in minimaler Zeit durchgeführt sowie präzise und insbesondere auch füllmengenabhängig gesteuert bzw. geregelt werden können. Die Erfindung kann dabei natürlich nicht nur bei der Aufbereitung medizinisch-therapeutischer Packungsmassen, sondern auch bei anderen schmelzbaren Stoffen angewendet werden, die ein den Packungsmassen ähnliches thermisches Verhalten zeigen.

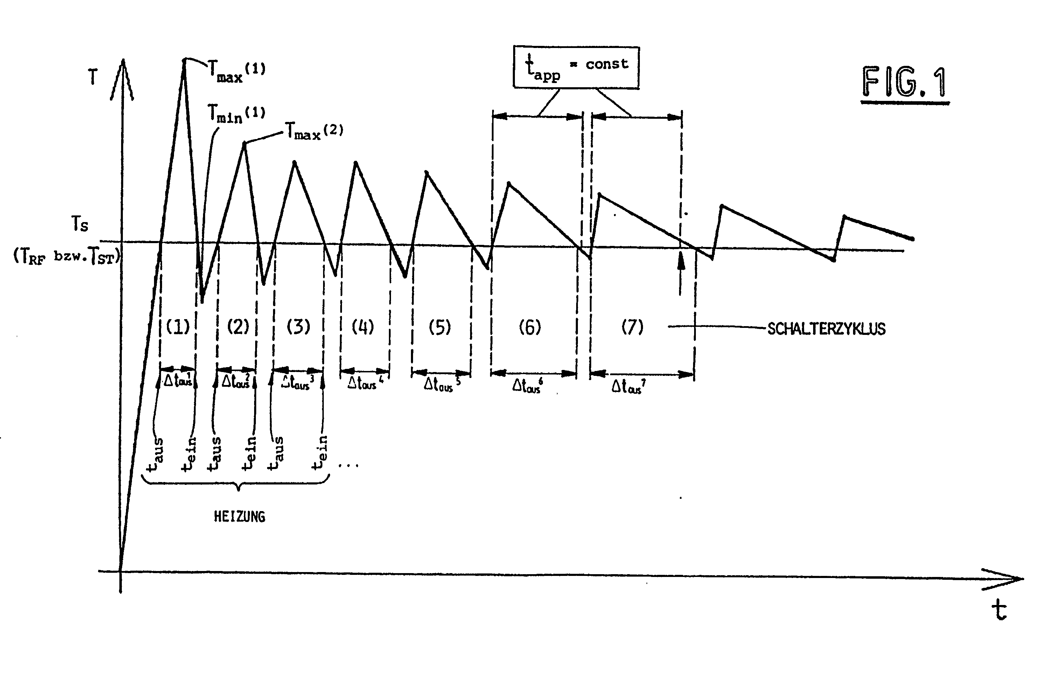

Die Erfindung macht dabei Gebrauch von folgender Erkenntnis über den charakteristischen Verlauf der Kesselwandungstemperatur (T), wenn diese mittels einer zweipunktgeregelten Heizung auf einen bestimmten Temperatursollwert ($T_s$) eingeregelt wird (siehe Fig. 1 : qualitatives Temperatur-Zeit-Diagramm der Kesselwandungstemperatur T). Solange die Kesselwandungstemperatur (T) geringer als die Solltemperatur ($T_s$) ist, wird der Kessel mit voller Heizleistung beheizt, also beispielsweise ausgehend vom erkalteten Anfangszustand. Sobald die Solltemperatur ($T_s$) erreicht ist, wird die Heizung abgeschaltet. Durch die Restwärme im Heizsystem erfolgt ein Überheizen des Kessels über die Solltemperatur ($T_s$) hinaus (ein sogenannter "Überschwinger") und anschließend ein Abkühlen des Kessels. Nach dem Durchlaufen des Temperaturmaximums ($T_{max}(1)$) und des Ausschaltzeitintervalls ($\Delta t_{aus}(1)$) zwischen dem Ausschaltzeitpunkt ($t_{aus}$) und dem Einschaltzeitpunkt ($t_{ein}$) erreicht die Kesselwandungstemperatur (T) wieder die Solltemperatur ($T_s$), die Heizung wird wieder eingeschaltet. Durch die dem System innewohnende Trägheit kühlt sich die Kesselwandung jedoch noch eine kurze Zeitspanne unter die Solltemperatur ab, bis durch den Einfluß der Heizung diese Tendenz in ein Aufheizen umgekehrt wird. Das Temperaturminimum ($T_{min}(1)$ wird durchlaufen. Erreicht die Kesselwandungstemperatur (T) abermals die Solltemperatur ($T_s$), wird die Heizung wieder abgeschaltet. Die Kesselwandungstemperatur durchläuft während des Ausschaltzeitintervalls ($\Delta t_{aus}(2)$ wieder einen "Überschwinger", bis wiederum die Solltemperatur ($T_s$) erreicht und die Heizung eingeschaltet wird. Dieser Ein- und Ausschaltvorgang wiederholt sich zyklisch (Schaltzyklen (1), (2),...). Es ist anzumerken, daß der spitze Verlauf der Temperaturmaxima und -minima in Fig. 1 übertrieben dargestellt ist. Realistisch ergeben sich wellenförmig gekrümmte Temperaturverläufe nach Art etwa einer Sinusschwingung. Es wurde jedoch festgestellt, daß sich durch die thermische Wechselwirkung zwischen der Kesselwandung und dem in der Temperatur nacheilenden, sich jedoch stetig erwärmenden Kesselinhalt das Ausschaltzeitintervall ($\Delta t_{aus}$) zwischen einem Ausschaltzeitpunkt ($t_{aus}$) und dem darauffolgenden Wiedereinschaltzeitpunkt ($t_{ein}$) von Schaltzyklus zu Schaltzyklus stetig verlängert. Dies beruht darauf, daß zwischen der Kesselwandung und dem Kesselinhalt eine thermische Wechselwirkung stattfindet. Im Schaltzyklus (1) ist der Kesselinhalt noch relativ kalt, was nach Durchlaufen des Temperaturmaximums eine schnelle Abkühlung zur Folge hat. Im nächsten Schaltzyklus (2) ist der Kesselinhalt schon wärmer, wodurch sich die Abkühlung nach Durchlaufen des Temperaturmaximums ($T_{max}(2)$) langsamer vollzieht. Durch die ständige Erhöhung der Temperatur des Kesselinhaltes wirkt dieser Abkühlungseffekt für die Kesselwandung immer geringer, wodurch die Abstiegsflanken des wellenförmigen Temperaturverlaufes immer flacher und entsprechend die Ausschaltzeitintervalle ($\Delta t_{aus}$) immer länger werden. Setzt man letztere in Verhältnis zu einem festen Gerätezeitintervall ($t_{app}$), so ist aus Fig. 1 erkennbar, daß ab einem bestimmten Schaltzyklus das Ausschaltzeitintervall ($\Delta t_{aus}$) das Gerätezeitintervall ($t_{app}$) überschreitet. In Fig. 1 ist dies beim Schaltzyklus (7) der Fall.

Die "Aufdehnung" des Ausschaltzeitintervalles ($\Delta t_{aus}$) erfolgt in Abhängigkeit der Füllmenge des Kesselinhaltes. Befindet sich wenig Packungsmasse im Kessel, so wird diese entsprechend schnell aufgeheizt, wodurch die "Aufdehnung" ebenfalls schneller erfolgt. Dadurch wird der Abkühleffekt in kürzerer Zeit vermindert, wodurch sich das Ausschaltzeitintervall innerhalb einer geringeren Anzahl von Schaltzyklen verlängert und insbesondere das Gerätezeitintervall übertrifft. Es wird erkennbar, daß durch den Vergleich des Ausschaltzeitintervalles ($\Delta t_{aus}$) mit dem Gerätezeitintervall ($t_{app}$) ein Steuersignal abgeleitet werden kann, das temperatur- und füllmengenabhängig eine bestimmte Funktion des Aufbereitungsgerätes steuern kann. Insbesondere handelt es sich hier um die Einschaltsteuerung für das Rührwerk bzw. die Beendigung des Sterilisationsprozesses.

Entsprechend ist im Kennzeichen des Anspruches 1 ein Verfahren zur Erzeugung eines elektrischen Steuersignales zur Funktionssteuerung eines Aufbereitungsgerätes der eingangs genannten Art angegeben, wonach das sich von Schaltzyklus zu Schaltzyklus durch die thermische Wechselwirkung zwischen Kesselwandung und Kesselinhalt stetig verlängernde Ausschaltzeit intervall zwischen dem Ausschaltzeitpunkt und dem darauf folgenden Wiedereinschaltzeitpunkt der Heizung in einem Zeitglied mit einem fest eingeprägten, konstanten Gerätezeitintervall verglichen wird und — falls das Ausschaltzeitintervall das Gerätezeitintervall überschreitet — am Ausgang des Zeitgliedes ein elektrisches Steuersignal zur Funktionssteuerung des Aufbereitungsgerätes erzeugt wird.

Mit Vorteil findet bei dem erfindungsgemäßen Verfahren also nur ein einziger Temperatursensor Verwendung. Eine aufwendige Verdrahtung zwischen verschiedenen Thermostaten - wie bei Geräten nach dem Stande der Technik - entfällt völlig. Darüber hinaus werden die zur Funktionssteuerung benötigten elektrischen Steuersignale abhängig von der Füllmenge des Kessels erzeugt, ohne daß eine direkte Messung dieser Füllmenge stattfinden müßte. Hier liegt ein entscheidender Vorteil gegenüber unter Umständen realisierbaren Aufbereitungsgeräten, bei denen eine direkte Füllmengenmessung stattfinden würde.

Nach Anspruch 2 wird das im Anspruch 1 allgemein angegebene Verfahren zur Erzeugung eines elektrischen Steuersignales zur möglichst frühzeitigen Einschaltsteuerung für das Rührwerk des Aufbereitungsgerätes angewendet. Demnach wird mittels einer Einstellvorrichtung eine gegenüber der normalen

3

Applikationstemperatur erhöhte Rührwerk-Einschalttemperatur eingestellt, auf die die Kesseltemperatur bis zur Erzeugung des elektrischen Steuersignales am Ausgang des Zeitgliedes zur Einschaltsteuerung für das Rührwerk eingeregelt wird. Bei der Inbetriebnahme des Aufbereitungsgerätes wird also durch die vorübergehende, überhöhte Kesseltemperatur ein möglichst frühzeitiger Rührwerkanlauf gewährleistet, was darüber hinaus auch noch füllmengenabhängig und damit generell in minimaler Zeit erfolgt.

Sobald das Rührwerk eingeschaltet ist, kann die Kesselwandung auf die normale Applikationstemperatur der Packungsmasse eingeregelt werden. Um dies sofort mit der Einschaltung des Rührwerkes zu gewährleisten, wirkt das elektrische Steuersignal zur Einschaltsteuerung für das Rührwerk zusätzlich auf den Eingang des Komparators zur Einschaltsteuerung zurück, so daß die Rührwerk-Einschalttemperatur auf einen Wert unterhalb der normalen Applikationstemperatur und etwas oberhalb der kritischen Erstarrungstemperatur der verwendeten Packungsmasse verschoben wird (Anspruch 3). Es ist darauf hinzuweisen, daß durch eine entsprechende schaltungstechnische Variation die Einregelung auf die Applikationstemperatur nicht unmittelbar nach Einschalten des Rührwerkes, sondern mit einer zeitlichen Verzögerung erfolgen kann. Durch die Ausgestaltung nach Anspruch 3 wird die Einschaltsteuerung für das Rührwerk gleichzeitig als Sicherungsschaltung verwendet, die verhindert, daß das Rührwerk bei Unterschreiten der kritischen Erstarrungstemperatur der verwendeten Packungsmasse weiterläuft (Motorschutz). Dabei wird nach Anspruch 4 bei Unterschreiten der herabgesetzten Rührwerk-Einschalttemperatur am Ausgang des Komparators ein Signal zum Einschalten der Heizung erzeugt, das gleichzeitig das Zeitglied in seinen Anfangszustand versetzt mit der Folge, daß das Rührwerk durch ein entsprechendes Steuersignal am Ausgang des Zeitgliedes abgeschaltet, der Schaltpunkt des Komparators auf den ursprünglichen Anfangswert zurückgesetzt und damit die Kesseltemperatur auf die erhöhte Rührwerk-Einschalttemperatur eingeregelt werden, wobei der Regel- und Steuerzyklus nach Anspruch 1 und 2 von neuem abläuft.

Im Anspruch 5 ist ein Verfahren zur Erzeugung eines elektrischen Steuersignales angegeben, das zur zeitlichen und thermischen Steuerung des Sterilisationsprozesses des Aufbereitungsgerätes verwendet wird. Dabei wird mittels einer Einstellvorrichtung eine gegenüber der normalen Applikationstemperatur wesentlich erhöhte Sterilisationstemperatur eingestellt, auf die die Kesseltemperatur bis zur Erzeugung des elektrischen Steuersignales am Ausgang des zugehörigen Zeitgliedes zur Beendigung des Sterilisationsvorganges eingeregelt wird. Da das elektrische Steuersignal zu dieser Beendigung nach Anspruch 1 in Abhängigkeit der Füllmenge des Kessels erzeugt wird, ist also auch hier eine möglichst schnelle Beendigung des Sterilisationsvorganges gewährleistet.

Mit Vorteil wird nach Anspruch 6 das elektrische Steuersignal zur Beendigung des Sterilisationsvorganges auf eine eingangsseitige Schaltvorrichtung des Regelkreises für den Sterilisationsprozeß rückgekoppelt, wodurch die Betriebsspannungsversorgung dieses Regelkreises mittels des Signales abgeschaltet wird. Die Abschaltung erfolgt also vollautomatisch und durch direkten Rückgriff des Ausganges des Regelkreises auf seine eigene Betriebsspannungsversorgung.

Da der Sterilisationsprozeß bei einer gegenüber der normalen Applikationstemperatur wesentlich erhöhten Temperatur stattfindet, brauchen Vorkehrungen zum Schutze des Rührwerkes nicht unbedingt getroffen werden. Entsprechend kann das elektrische Steuersignal am Ausgang des Zeitgliedes der Sterilisationsprozeßsteuerung zusätzlich als Steuersignal zur Einschaltsteuerung für das Rührwerk verwendet werden (Anspruch 7), sobald über die Rührwerk-Einschaltsteuerung ein Betrieb erlaubt ist. Ganz allgemein können der Einschaltsteuerung weitere extern bedienbare Schaltungsteile nachgeordnet sein, die weitergehende Rührwerkfunktionen (Dauer-, Intervallbetrieb etc.) erlauben. Dabei ist jedoch auf eine hierarchische Ordnung in dem Sinne zu achten, daß ein Rührwerk-Betrieb — egal welcher Art — nur möglich ist, wenn durch die hier beschriebene Steuerung ein Betrieb an sich erlaubt ist.

Im Anspruch 8 ist das erfindungsgemäße Aufbereitungsgerät für medizinisch-therapeutische Packungsmassen beschrieben, bei dem das erfindungsgemäße Verfahren zur Erzeugung des fraglichen elektrischen Steuersignales angewendet wird. Dabei findet — wie bereits beim erfindungsgemäßen Verfahren als Vorteil angegeben — nur ein einziger Temperaturfühler Verwendung. Die einzuregelnden Temperaturen, wie Applikations-, Sterilisations- und Rührwerk-Einschalttemperatur werden über entsprechende Einstellvorrichtungen in Form von beispielsweise Potentiometern gesetzt und durch jeweils als Zweipunktregler wirkende Komparatoren mit der Kesseltemperatur verglichen. Die Komparatoren sind auf bekannte Weise durch Operationsverstärker realisiert, die durch eine Rückkopplung vom Ausgang des Operationsverstärkers auf den nicht-invertierenden Eingang ein Hystereseverhalten zeigen. Die Ausgänge der Komparatoren sind jeweils mit dem Steuereingang der Heizung verbunden, wodurch das Ausgangssignal der Komparatoren als Steuersignal zum Ein- und Ausschalten der Heizung dient.

Damit das erfindungsgemäße Verfahren zur Anwendung kommen kann, ist gemäß den kennzeichnenden Merkmalen des Anspruches 8 dem Ausgang des der Rührwerk-Einschaltsteuerung und/oder des der Sterilisationsprozeßsteuerung zugeordneten Komparators jeweils ein Zeitglied nachgeschaltet, in welchem das jeweilige Ausschaltzeitintervall mit einem dem Zeitglied eingeprägten, konstanten Gerätezeitintervall vergleichbar ist. Der Ausgang des Zeitgliedes ist mit einem entsprechenden Steuereingang einer Funktionseinheit des Aufbereitungsgerätes verbunden und erzeugt entsprechend dem Ergebnis des vorgenannten Vergleiches ein repräsentatives Ausgangssignal, das als elektrisches Steuersignal für die Funktionseinheit dient.

Mit dem erfindungsgemäßen Aufbereitungsgerät werden verschiedene Vorteile erzielt. Zum einen werden sämtliche Temperaturen und Funktionen vollelektronisch geregelt und gesteuert. Bimetall-gesteuerte Thermostaten mit allen ihren Nachteilen (manuelle Justierung, unexakte Schaltpunkte, verschleißanfällige Schaltkontakte etc.) werden vermieden. Darüber hinaus arbeitet das Gerät — wie bereits erläutert — in seinen Regel- und Steuercharakteristiken füllmengenabhängig. Das bedeutet, daß bei einer geringeren Füllmenge und entsprechend schnellerer Aufheizung des Kesselinhaltes der Sterilisationsprozeß eher abgeschlossen sowie das Rührwerk eher eingeschaltet werden.

In den Ansprüchen 9-16 sind vorteilhafte Ausgestaltungen des erfindungsgemäßen Aufbereitungsgerätes angegeben.

Durch die in Anspruch 9 angegebene Triggerschaltung zum Starten bzw. Stoppen der Zeitglieder wird die Regel- und Steuergenauigkeit des Gerätes erhöht. Über die Trigger-Schaltung können zudem verschiedene Nebenfunktionen erfüllt werden, wie aus der weiteren Ausgestaltung nach Anspruch 10 klar wird. Über den angegebenen Triggertransistor wird nämlich zusätzlich das Laden und Entladen der in Anspruch 12 angegebenen Ladekondensatoren gesteuert.

Nach Anspruch 11 sind die Zeitglieder jeweils als IC-Chipbausteine ausgebildet, die mit entsprechenden Ladewiderständen und -kondensatoren extern beschaltbar sind. Dadurch ist den Zeitgliedern auf einfache Weise ein entsprechendes festes Gerätezeitintervall einprägbar. Dieses Gerätezeitintervall wird durch entsprechende Versuche während der Geräteentwicklung ermittelt und ist in der Regel von der absoluten Kesselgröße abhängig. Es kann jedoch davon ausgegangen werden, daß bei einer festen maximalen Heizleistung des Aufbereitungsgerätes und einem bestimmten Kesselinhalt bei Aufbereitungsgeräten gleichen Typs die notwendigen Gerätezeitintervalle zur exakten Durchführung der gewünschten Regel- und Steuerfunktionen übereinstimmen.

In Anspruch 11 ist festgelegt, wie die Ausgänge der Zeitglieder aufgrund von Steuersignalen an ihren Eingängen ausgangsseitig reagieren. Falls die Zeitspanne zwischen aufeinanderfolgenden Steuersignalen am Eingang größer ist als das eingeprägte Gerätezeitintervall, wird am Ausgang ein entsprechendes Signal — also ein Übergang von beispielsweise hohen in niedrigen Ausgangspegel — erzeugt.

Da nach Anspruch 12 die den Zeitgliedern zugeordneten Ladekondensatoren über Entladewiderstände entladbar sind, wobei die Entladung über die Triggerschaltung gesteuert wird, herrschen von Schaltzyklus zu Schaltzyklus gleiche Anfangsbedingungen. Dies ist unabdingbar, um eine exakte Durchführung der Steuer- und Regelfunktionen zu gewährleisten.

Nach Anspruch 13 kann — wie bereits bei den Verfahrensansprüchen angegeben — der Steuerausgang eines der Zeitglieder mit dem Steuereingang für den Antrieb des Rührwerkes verbunden sein. Damit wird ein frühestmögliches Einschalten des Rührwerkes abhängig von der jeweiligen Füllmenge des Kesselinhaltes erzielt.

Durch die Ausgestaltung des Aufbereitungsgerätes nach Anspruch 14 wird der der Rührwerk-Einschaltsteuerung zugeordnete Komparator durch das Steuersignal am Ausgang des Zeitgliedes zum Einschalten des Rührwerkes in seiner Einschalttemperatur drastisch verändert. Zur Vermeidung von Wiederholungen wird auf die Ausführungen zu den Verfahrensansprüchen 3 und 4 verwiesen.

Nach Anspruch 15 weist die Regelvorrichtung für die Ansteuerung der Heizung während des Sterilisationsprozesses eingangsseitig eine Schaltvorrichtung auf, die die Betriebsspannung für diesen Geräteteil ein- und ausschaltet. Letzteres kann durch Tastschalter manuell erfolgen, zusätzlich ist jedoch eine vollautomatische Beendigung des Sterilisationsprozesses gewährleistet. Dazu ist der Ausgang des zugehörigen Zeitgliedes auf den einen Eingang eines Steuer-Operationsverstärkers rückgekoppelt, dessen Ausgang mit der Basis eines Schalttransistors verbunden ist. Dieser Schalttransistor kann die Betriebsspannung ein- und ausschalten. Ein entsprechendes elektrisches Steuersignal am Ausgang des Zeitgliedes wird eingangsseitig auf den Operationsverstärker gegeben, über dessen Ausgang der Schalttransistor gesperrt und damit die Betriebsspannungsversorgung der Regelvorrichtung abgeschaltet wird. Zu den schaltungstechnischen Details und entsprechenden Vorteilen wird auf das Ausführungsbeispiel verwiesen.

Durch die zusätzliche Verbindung des Ausganges des Zeitgliedes, das der Regelvorrichtung für den Sterilisationsprozeß zugeordnet ist, mit dem Steuereingang für den Antrieb des Rührwerkes kann letzteres während des Sterilisationsprozesses unabhängig von der Rührwerk-Einschaltsteuerung betrieben werden. Es ist nämlich davon auszugehen, daß während der Sterilisation durch die dabei auftretenden hohen Temperaturen das Rührwerk ständig laufen kann. Ein Erstarren der Packungsmasse ist nicht zu befürchten.

Die Erfindung wird anhand der beiliegenden Figuren 2-4 in einem Ausführungsbeispiel näher erläutert. Es zeigen :

Fig. 2    ein Blockschaltbild der Regel- und Steuereinheit des Aufbereitungsgerätes,
Fig. 3    ein Schaltbild der Regel- und Steuereinheiten für die Applikationstemperatur und die Rührwerk-Einschaltsteuerung und
Fig. 4    ein Schaltbild der Regel- und Steuereinheit für die Applikationstemperatur mit der Sterilisationsprozeß-Steuerungseinheit.

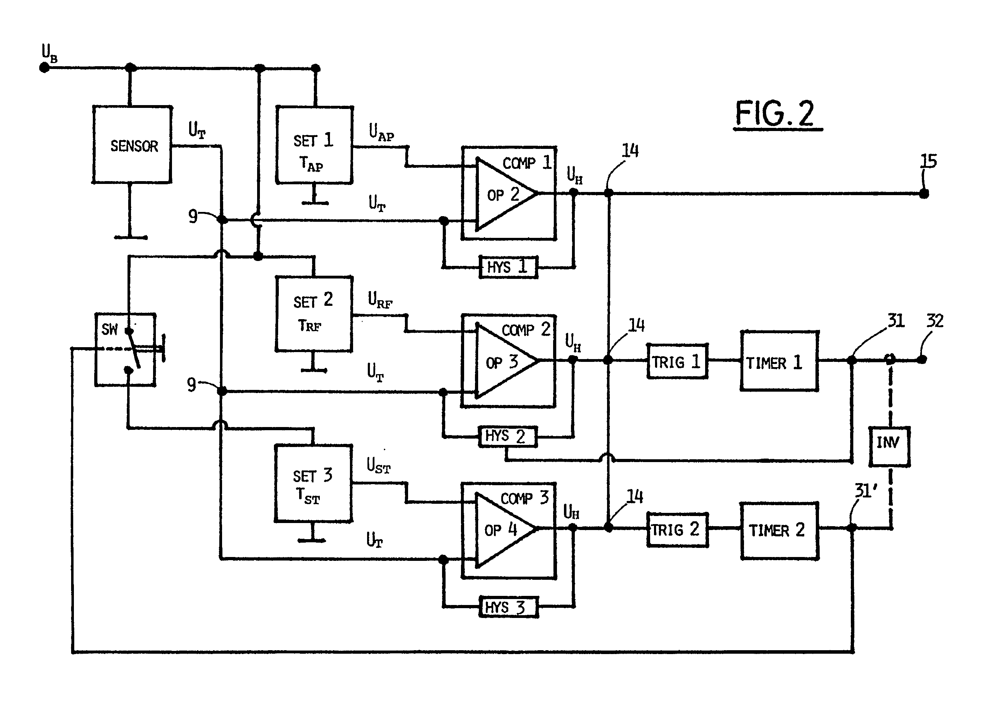

Anhand von Fig. 2 kann der erfindungsgemäße Aufbau des Aufbereitungsgerätes sowie das erfindungsgemäße Verfahren erläutert werden.

Mittels eines in thermischem Kontakt mit der Kesselwandung angeordneten Temperaturfühlers (SENS) wird ein für die momentane Wandungstemperatur repräsentatives elektrisches Signal ($U_T$) aus der Betriebsspannung ($U_B$) erzeugt. Mittels dreier Einstellvorrichtungen (SET1, SET2, SET3) werden der gewünschten Applikationstemperatur ($T_{AP}$), Rührwerk-Einschalttemperatur ($T_{RF}$) und Sterilisationstemperatur ($T_{ST}$) entsprechende elektrische Signale ($U_{AP}$, $U_{RF}$ und $U_{ST}$) aus der Betriebsspannung ($U_B$) abgeleitet. Bei den Einstellvorrichtungen (SET1, SET2, SET3) kann es sich um schlichte Potentiometer handeln, die entweder extern von einer Bedienungsperson des Gerätes einstellbar sind bzw. als Trimm-Potentiometer lediglich intern verstellbar ausgeführt sein können.

Die vorgenannten elektrischen Signale ($U_T$ und $U_{AP}$ bzw. $U_{RF}$ bzw. $U_{ST}$) werden jeweils in Komparatoren (COMP1, COMP2, COMP3) miteinander verglichen. Die Komparatoren sind aus Operationsverstärkern (OP2, OP3, OP4) realisiert, die durch entsprechende Rückkopplungen (HYS1, HYS2, HYS3) als Zweipunktregler mit Hysterese-Verhalten wirken. Die Ausgänge der Komparatoren (COMP1, COMP2, COMP3) sind jeweils mit dem Steuereingang (15) für die Kesselheizung verbunden.

Soll nun beispielsweise ein Sterilisationsprozeß durchgeführt werden, so kann die entsprechende, aus der Einstellvorrichtung (SET3) und dem Komparator (COMP3) bestehende Regeleinrichtung durch externe Betätigung des Schalters (SW) aktiviert werden. Am Ausgang des Komparators (COMP3) wird solange ein positives Ausgangssignal ($U_H$) erzeugt, das die Heizung einschaltet, wie die Kesselwandungstemperatur (T) geringer ist als die Sterilisationstemperatur ($T_{ST}$). Sobald diese Temperatur erreicht ist, schaltet der Komparator ausgangsseitig um, wodurch die Heizung abgeschaltet wird. Die in Fig. 1 dargestellten Schaltzyklen werden durchlaufen. Dem Ausgang des Komparators (COMP3) ist über eine Trigger-Schaltung (TRIG2) das Zeitglied (TIMER2) nachgeschaltet, in dem das Ausschaltzeitintervall ($\Delta t_{aus}$) mit dem Gerätezeitintervall ($t_{app}$) verglichen wird. Sobald das Ausschalt- das Gerätezeitintervall überschreitet, wird am Ausgang (31') des Zeitgliedes (TIMER2) ein Steuersignal erzeugt.

Da der Ausgang (31') mit dem Schalter (SW) rückgekoppelt ist, wird durch das Ausgangssignal des Zeitgliedes (TIMER2) der Schalter (SW) betätigt und die Betriebsspannung ($U_B$) für die Einstellvorrichtung (SET3) und den Komparator (COMP3) abgeschaltet. Damit wird der Sterilisationsprozeß durch das elektrische Steuersignal am Ausgang (31') des Zeitgliedes (TIMER2) beendet.

Analoges gilt für die Rührwerk-Einschaltsteuerung. Über die Einstellvorrichtung (SET2) und den Komparator (COMP2) wird der Kessel auf eine Rührwerk-Einschalttemperatur ($T_{RF}$) analog dem in Fig. 1 dargestellten, charakteristischen Temperaturverlauf eingeregelt. Das entsprechende Ausschaltzeitintervall ($\Delta t_{aus}$) wird wiederum über ein dem Komparator (COMP2) nachgeschaltetes Zeitglied (TIMER1) mit einem Gerätezeitintervall ($t_{app}$) verglichen. Auch das Zeitglied (TIMER1) wird über eine Trigger-Schaltung (TRIG1) angesteuert. Am Ausgang (31) des Zeitgliedes (TIMER1) ensteht dann ein elektrisches Steuersignal, wenn das entsprechende Ausschaltzeitintervall ($\Delta t_{aus}$) das Gerätezeitintervall ($t_{app}$) überschreitet. Durch die Rückkopplung des Ausganges (31) des Zeitgliedes (TIMER1) auf die Rückkopplung (HYS2) des Komparators (COMP2) wird dessen Schaltpunkt deutlich heruntergesetzt und zwar unterhalb der Applikationstemperatur ($T_{AP}$). Wie bereits angegeben, soll die neue Einschalttemperatur jedoch etwas über der kritischen Erstarrungstemperatur der Packungsmasse liegen, wodurch neben der Rührwerk-Einschaltsteuerung auch eine Sicherung des Rührwerkes gegen einen Betrieb nach Erstarren der Packungsmasse gewährleistet ist. Dies dient dem Motorschutz gegen Überlastung.

Der Ausgang (31) des Zeitgliedes (TIMER1) ist weiterhin mit dem Steuereingang (32) für die Rührwerk-Einschaltsteuerung verbunden. Sobald das entsprechende Steuersignal am Ausgang (31) ansteht, wird das Rührwerk eingeschaltet.

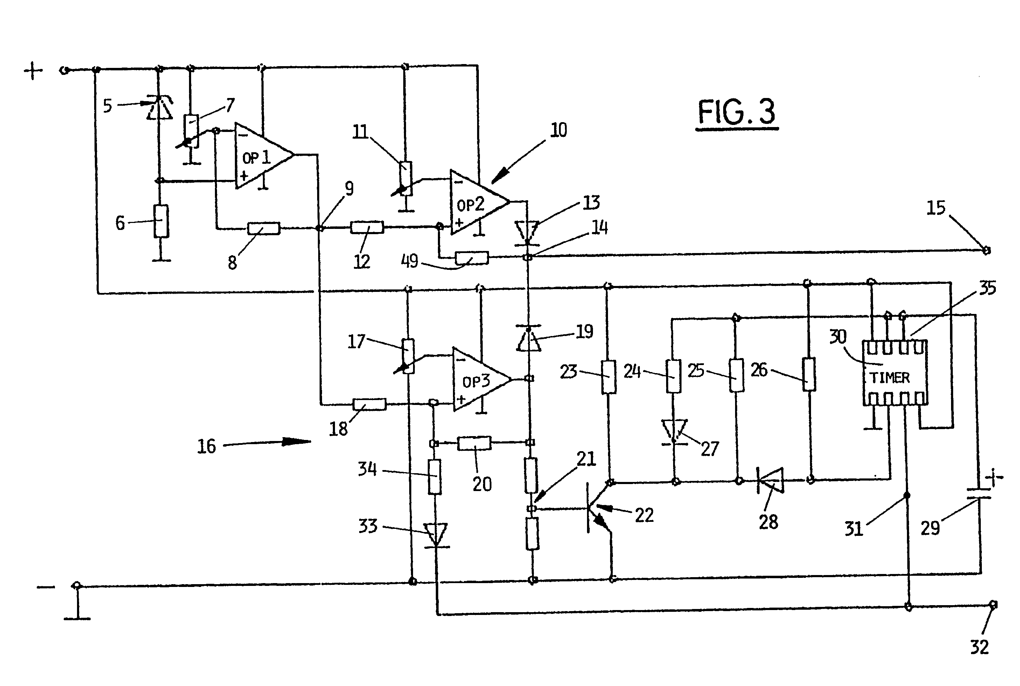

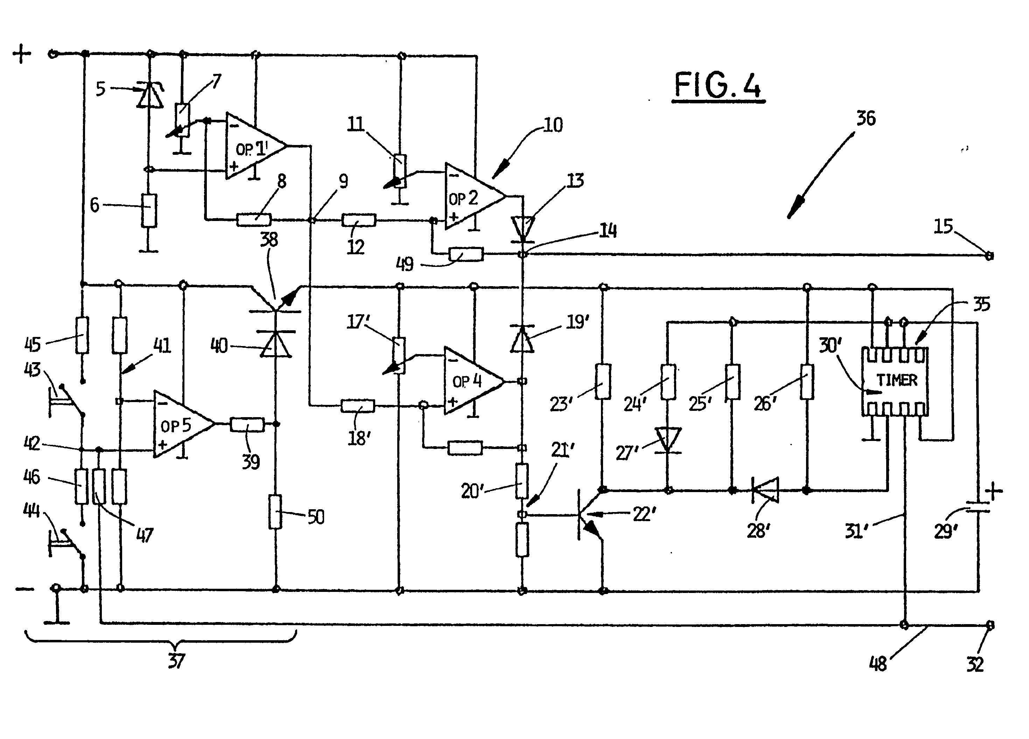

Die genaue schaltungstechnische Realisation ist den Fig. 3 und 4 entnehmbar.

Dabei ist in diesen beiden Figuren die Temperaturfühlereinheit (SENS) sowie die Einstellvorrichtung (SET1) für die Applikationstemperatur ($T_{AP}$) mit dem Komparator (COMP1) gezeigt. In Fig. 1 ist zugeordnet die Vorrichtung zur Einschaltsteuerung und Sicherung des Rührwerkes, wogegen in Fig. 4 die Einheit zur Sterilisationsprozeßsteuerung dargestellt ist. Die Gesamtsteuer- und Regelvorrichtung ergibt sich aus einer Kombination der in Fig. 3 und 4 dargestellten Teilvorrichtungen entsprechend dem Blockschaltbild nach Fig. 2.

Die Temperaturfühlereinheit (SENS) ist gemäß Fig. 3 und 4 aus dem eigentlichen Temperatursensor (5) auf Halbleiterbasis und in Reihe dazu dem Widerstand (6) zusammengesetzt. Temperatursensor (5) und Widerstand (6) bilden einen zwischen positives Betriebspotential (+) und Masse geschalteten, temperaturvariablen Spannungsteiler, dessen Mittenabgriff auf den nicht-invertierenden Eingang des Operationsverstärkers (OP1) gelegt ist. Dessen invertierender Eingang ist mit einem Trimm-Potentiometer (7) verbunden und über einen Widerstand (8) vom Ausgang des Operationsverstärkers (OP1) her rückgekoppelt. Die vorbeschriebene Anordnung dient zur Justierung der Temperaturfühlereinheit, damit am Knotenpunkt (9) ein definiertes, einer bestimmten Kesselwandungstemperatur (T) zugeordnetes elektrisches Signal ($U_T$) ansteht, dessen Wert der von Fühler (5) gemessenen Temperatur umgekehrt proportional ist.

Die in den Fig. 3 und 4 jeweils dargestellte Regelvorrichtung (10) für die Applikationstemperatur ($T_{AP}$) besteht aus einem als Komparator (COMP1) geschalteten Operationsverstärker (OP2) und der dessen invertierenden Eingang vorgeschalteten Einstellvorrichtung (SET1). Letztere besteht aus einem extern einstellbaren Potentiometer (11), das eine auf Temperatur geeichte Einstellskala besitzt.

Das am Knotenpunkt (9) anstehende, der Temperatur umgekehrt proportionale elektrische Signal ($U_T$) wird über den Vorschaltwiderstand (12) auf den nicht-invertierenden Eingang des Operationsverstärkers (OP2) geringgelegt. Solange das elektrische Signal ($U_T$) größer ist als das durch das Potentiometer (11) am (OP2) anliegende elektrische Signal ($U_{AP}$) für die Soll-Applikationstemperatur, wird am Ausgang des Operationsverstärkers (OP2) ein positives Steuersignal erzeugt, das über die Diode (13) auf den Knotenpunkt (14) gelegt wird. Letzterer ist mit dem Steuereingang (15) der Heizung verbunden, die bei Anliegen eines positiven Signals am Steuereingang (15) eingeschaltet ist. Der Operationsverstärker (OP2) ist über den Widerstand (49) (entspricht HYS1 in Fig. 2) rückgekoppelt, wodurch in Verbindung mit dem Vorschaltwiderstand (12) ein Hystereseverhalten erzeugt wird.

In Fig. 3 ist in Verbindung mit der Regelvorrichtung (10) für die Applikationstemperatur ($T_{AP}$) die Regelvorrichtung (16) für die Regelung der Kesselwandungstemperatur auf Rührwerk-Einschalttemperatur sowie für den Betrieb des Rührwerkes und dessen Sicherung gezeigt. Diese weist analog der Regelvorrichtung (10) ein Potentiometer (17) als Einstellvorrichtung (SET2) für die Rührwerk-Einschalttemperatur ($T_{RF}$), einen als Komparator (COMP2) geschalteten Operationsverstärker (OP3), einen Vorschaltwiderstand (18), zwischen dem Ausgang des Operationsverstärkers (OP3) und dem Knotenpunkt (14) eine Diode (19) sowie den Widerstand (20) zur Rückkopplung und Hystereseeinstellung (entspricht HYS2 gemäß Fig. 2) des Komparators (COMP2) auf. Das Potentiometer (17) ist lediglich intern bei der Montage des Gerätes auf die entsprechende Rührwerk-Einschalttemperatur einstellbar. Diese eingestellte Temperatur wird in der Regel deutlich höher sein als die am Potentiometer (11) einzustellende Applikationstemperatur ($T_{AP}$).

Bei der Inbetriebnahme des Aufbereitungsgerätes ist die Packungsmasse im Kessel in der Regel erstarrt. Diese muß also erst aufgeheizt werden, wobei möglichst frühzeitig das Rührwerk eingeschaltet werden soll, um ein schnelles Schmelzen der Packungsmasse zu unterstützen. Hier greift die Regelvorrichtung (16) ein. Wie beschrieben ist am Potentiometer (17) eine höhere Temperatur als die Applikationstemperatur am Potentiometer (11) eingestellt. Entsprechend entsteht über den Operationsverstärker (OP3) am Knotenpunkt (14) länger ein positives Steuersignal für den Steuereingang (15) der Heizung, wodurch der Kessel auf eine entsprechend höhere Temperatur aufgeheizt wird.

Das Einschalten des Rührwerkes, das Beendigen der Regelung der Kesseltemperatur auf die Rührwerk-Einschalttemperatur sowie die Sicherung des Rührwerkes vor Betrieb bei Unterschreiten der Erstarrungstemperatur der Packungsmasse wird durch die dem Ausgang des Operationsverstärkers (OP3) nachgeschaltete Einheit aus der Trigger-Schaltung (TRIG1) und dem Zeitglied, bestehend aus dem (TIMER1) und verschiedenen Beschaltungswiderständen, Dioden und Kondensatoren realisiert.

Die Trigger-Schaltung (TRIG1) beteht aus einem zwischen dem Ausgang des Operationsverstärkers (OP3) und dem negativen Betriebspotential (–) angeordneten Spannungsteiler (21), dessen Mittenabgriff mit dem Basisanschluß des Trigger-Transistors (22) verbunden ist. Dessen Kollektor ist über einen Widerstand (23) mit der positiven Betriebsspannung (+), dessen Emitter mit der negativen Betriebsspannung (–) verbunden. Parallel zur Kollektor-Emitter-Strecke des Trigger-Transistors (22) sind diesem das Zeitglied (TIMER1) und verschiedene zugehörige Beschaltungselemente, wie Widerstände (24, 25, 26), Dioden (27, 28) und ein Ladekondensator (29) nachgeschaltet. Das Herzstück des Schaltgliedes (TIMER1) ist ein IC-Chipbaustein (30). Dessen Ausgang (31) ist mit dem Steuereingang (32) für die Rührwerk-Einschaltsteuerung verbunden. Über die Diode (33) und den Widerstand (34) ist der Ausgang (31) des IC-Chipbausteins (30) auf den nichtinvertierenden Eingang des Operationsverstärkers (OP3) rückgekoppelt.

Die Regelvorrichtung (16) zeigt folgendes Verhalten :

Auszugehen ist von der Inbetriebnahme des Aufbereitungsgerätes, wobei die Packungsmasse noch erstarrt ist. Die Kesseltemperatur (T) befindet sich noch weit unterhalb der am Potentiometer (11 bzw. 17) eingestellten Temperaturen. Entsprechend geben beide Operationsverstärker (OP2 und OP3) auf den Knotenpunkt (14) ein positives Steuersignal für die Heizung. Diese arbeitet mit voller Leistung. Nach Erreichen der Applikationstemperatur schaltet zwar der Operationsverstärker (OP2) um, jedoch wird über den Operationsverstärker (OP3) am Knotenpunkt (14) nach wie vor ein positives Steuersignal für die Heizung erzeugt, wodurch weiter bis zum Erreichen der am Potentiometer (17) eingestellten Rührwerk-Einschalttemperatur hochgeheizt wird. Während dieser Phase ist der Trigger-Transistor (22) leitend, da am Ausgang des Operationsverstärkers (OP3) ein positives Signal ansteht, das über den Spannungsteiler (21) auf den Basisanschluß des Trigger-Transistors (22) gelegt wird. Durch die entsprechende Beschaltung des IC-Chipbausteines liegt an dessen Ausgang (32) ein positives Ausgangssignal, das am Steuereingang (32) für den Rührwerkantrieb ansteht und in der Weise verarbeitet wird, daß das Rührwerk nicht eingeschaltet ist. Sobald die Rührwerk-Einschalttemperatur erreicht ist, wechselt der Ausgang des Operationsverstärkes (OP3) auf einen niedrigen Pegel, wodurch der Trigger-Transistor (22) gesperrt wird. Ab diesem Zeitpunkt wird über die Widerstände (23 und 25) der Ladekondensator (29) aufgeladen. Dies erfolgt solange, bis am Ausgang des Operationsverstärkers (OP3) wieder durch Unterschreiten der Rührwerk-Einschalttemperatur ein positives Signal ansteht. Dadurch wird der Trigger-Transistor (22) leitend und der Ladekondensator (29) über den Widerstand (24) und die Diode (27) entladen.

Die am Eingang (35) des IC-Chipbausteins (30) sich beim Laden des Ladekondensators (29) aufbauende Spannung wird Chip-intern mit einer festen Spannung verglichen. Letztendes erfolgt also ein Vergleich des Ausschaltzeitintervalls zwischen dem Ausschaltzeitpunkt des Operationsverstärkers (OP3) und dessen darauffolgenden Wiedereinschaltzeitpunkt mit einem festen Gerätezeitintervall. Sobald das Ausschaltzeitintervall ($\Delta t_{aus}$) das Gerätezeitintervall ($t_{app}$) überschreitet, wechselt der Ausgang (31) des IC-Chipbausteins von einem positiven Ausgangssignal auf einen Pegel nahe Null, wodurch das Rührwerk über den Steuereingang (32) eingeschaltet wird. Durch diesen Pegel nahe dem Null-Potential wird darüber hinaus durch die Rückkopplung über die Diode (33) und den Widerstand (34) der Schaltpunkt des Operationsverstärkers (OP3) in der Weise geändert, daß die Regelvorrichtung nunmehr auf eine Temperatur unterhalb der Applikationstemperatur ($T_{AP}$) regelt. Die Widerstände (18) und (34) bilden nun nämlich einen Spannungsteiler, wodurch das am Knotenpunkt (9) anstehende elektrische Signal ($U_T$) so verändert wird, als ob am Fühler (5) eine höhere Temperatur herrscht. Entsprechend niedriger liegt nunmehr die Schalttemperatur des Operationsverstärkers (OP3). Da jedoch die Regelvorrichtung (10) jetzt auf die Applikationstemperatur regelt, wird am Operationsverstärker (OP3) kein positives Ausgangssignal mehr erzeugt. Sollte jedoch einmal die Temperatur der Kesselwandung auf die neu eingestellte Einschalttemperatur ($T_{RF}'$) des Operationsverstärkers (OP3) absinken, beispielsweise durch Stromausfall, so erzeugt dieser wieder ein positives Ausgangssignal. Über den Trigger-Transistor (22) wird der Ausgang (31) des IC-Chipbausteins (30) wieder in den hohen Pegel versetzt, wodurch das Rührwerk ausgeschaltet wird. Analog wird die Rückkopplung des Operationsverstärkers (OP3) auf den ursprünglichen Zustand rückgesetzt, wodurch neuerdings eine Regelung auf die Rührwerk-Einschalttemperatur ($T_{RF}$) erfolgt, bis über das Zeitglied (TIMER1) das Rührwerk wieder eingeschaltet wird.

In Fig. 4 ist die Regelvorrichtung (10) in Kombination mit der Regelvorrichtung (36) gezeigt, die die Kesselwandungstemperatur auf die Sterilisationstemperatur einregelt und den Sterilisationsprozeß automatisch beendet. Zur Vermeidung von Wiederholungen sei darauf hingewiesen, daß die Regelvorrichtung (36) mit ihrem als Komparator (COMP3) geschalteten Operationsverstärker (OP4) in ihren wichtigen Bauteilen analog der Regelvorrichtung (16) ausgebildet ist. Übereinstimmende Bauteile sind mit übereinstimmenden, jedoch apostrophierten Bezugszeichen gekennzeichnet. Am Potentiometer (17') wird entsprechend die Sterilisationstemperatur ($T_{ST}$) eingestellt, die gegenüber der Rührwerk-Einschalttemperatur ($T_{RF}$) nochmals wesentlich erhöht ist. Am Ausgang des Operationsverstärkers (OP4) entsteht solange ein positives Ausgangssignal, das über den Knotenpunkt (14) auf den Steuereingang (15) der Heizung gelegt wird, wie die Kesselwandungstemperatur niedriger als diese Sterilisationstemperatur ist. Es ist darauf hinzuweisen, daß die Operationsverstärker (OP2, OP3, OP4) und die nachgeschalteten Zeitglieder (TIMER1, TIMER2) durch die Dioden (13, 19, 19') in Rückrichtung entkoppelt sind.

Mit Erreichen der Sterilisationstemperatur geht der Ausgang des Operationsverstärkers (OP4) in einen niedrigen Pegel über, die Heizung wird ausgeschaltet und das Zeitglied (TIMER2) über die Trigger-Schaltung (TRIG2 : Spannungsteiler 21', Trigger-Transistor 22') gestartet. Solange das Ausschaltzeitintervall ($t_{aus}$) kürzer ist als das durch die Beschaltung des Zeitgliedes (TIMER2) gegebene Gerätezeitintervall ($t_{app}$) bleibt der Ausgang (31') des IC-Chipbausteines (30') auf einem hohen Pegel.

Wesentlicher Unterschied der Regelvorrichtung (36) gegenüber der Regelvorrichtung (16) ist die eingangsseitige Schaltvorrichtung (37), über die die Regelvorrichtung (36) mit der positiven bzw. negativen Betriebsspannung versorgt wird. Diese Vorrichtung (37) besteht im wesentlichen aus einem Schalttransistor (38), dessen Kollektor-Emitterstrecke in der Zuleitung für die positive Betriebsspannung zur Regelvorrichtung (36) angeordnet ist. Des weiteren weist die Schalteinrichung (37) einen Operationsverstärker (OP5) auf, dessen Ausgang über einen Ausgangswiderstand (39) und eine Diode (40) mit der Basis des Schalttransistors (38) verbunden ist. Eine weitere Verbindung besteht zwischen dem Ausgang über den Ausgangswiderstand (39) und den Widerstand (50) zum negativen Betriebspotential (–). Der invertierende Eingang des Operationsverstärkers (OP5) ist mit dem Mittenabgriff eines zwischen positivem und negativem Betriebspotential liegenden Spannungsteilers (41) verbunden. Der nicht-invertierende Eingang ist über eine Verzweigung (42) jeweils über Tastschalter (43, 44) und Widerstände (45, 46) mit dem positiven bzw. negativen Betriebspotential verbunden. Der Tastschalter (43) dient zum Aktivieren des Sterilisationsprozeßes, während der Tastschalter (44) zum vorzeitigen Beenden — beispielsweise wenn der Tastschalter (43) unabsichtlich betätigt wurde — verwendet wird. Zum automatischen Beenden des Sterilisationsprozesses ist der nicht-invertierende Eingang des Operationsverstärkers (OP5) über einen weiteren Widerstand (47) mit dem Ausgang (31') des IC-Chipbausteins (30') des Zeitgliedes (TIMER2) verbunden.

Die Regel- (36) und insbesondere Schaltvorrichtung (37) zeigt folgendes Funktionsverhalten :

Bei geöffneten Tastschaltern (43, 44) entsteht am Ausgang des Operationsverstärkers (OP5) kein positives Signal, wodurch der Schalttransistor (38) sperrt und die Regelvorrichtung (36) von der Betriebsspannung abgekoppelt ist. Durch Betätigung des Tastschalters (43) schaltet der Operationsverstärker (OP5) um, wodurch der Schalttransistor (38) leitend wird und die gesamte Regelvorrichtung (36) an die Betriebsspannung anschließt. Am Ausgang des Operationsverstärkers (OP4) entsteht ein positives Ausgangssignal, das die Heizung über den Knotenpunkt (14) und den Steuereingang (15) einschaltet. Gleichzeitig wird der Trigger-Transistor (22') leitend, wodurch das Zeitglied (TIMER2) und entsprechend der Chipbaustein (30') aktiviert wird und dessen Ausgang (31') auf einen hohen Pegel gesetzt wird. Da dieser auf den nicht-invertierenden Eingang des Operationsverstärkers (OP5) rückgekoppelt ist, kann der Tastschalter (43) losgelassen werden, ohne daß der Ausgang des Operationsverstärkers (OP5) in den niedrigen Pegel zurückschaltet. Der Schalttransistor (38) bleibt leitend, die gesamte Regelvorrichtung (36) wird weiterhin mit Spannung versorgt. Es werden die in Fig. 1 dargestellten Regelzyklen durchlaufen, bis über das Zeitglied (TIMER2) festgestellt wird, daß das Ausschaltzeitintervall ($\Delta t_{aus}$) das Gerätezeitintervall ($t_{app}$) überschreitet. Damit schaltet der Ausgang (31') des IC-Chipbausteins (30') auf niedriges Potential um. Da dieses Signal auf dem nicht-invertierenden Eingang des Operationsverstärkers (OP5) rückgekoppelt wird, geht dessen Ausgang in den niedrigen Pegelzustand über und sperrt den Schalttransistor (38). Die Regelvorrichtung (36) wird von der Betriebsspannungsversorgung abgetrennt und der Sterilisationsprozeß entsprechend beendet. Der analoge Vorgang wird durchgeführt, wenn der Tastschalter (44) geschlossen und damit der nicht-invertierende Eingang des Operationsverstärkers (OP5) an negatives Betriebspotential gelegt wird.

Über einen Nebenzweig (48), in dem gegebenenfalls ein Inverter (INV) (siehe Fig. 2) zur logischen Umkehrung der Ausgangspegel des Ausgangs (31') eingeschaltet sein kann, kann der Ausgang (31') der Regelvorrichtung (36) ebenfalls mit dem Steuereingang (32) für die Rührwerk-Einschaltsteuerung verbunden sein.

Bezugszeichen

| | |
|---|---|
| 5 | Temperatursensor |
| 6 | Widerstand |
| 7 | Trimm-Potentiometer |
| 8 | Widerstand |
| 9 | Knotenpunkt |
| 10 | Regelvorrichtung |
| 11 | Potentiometer |
| 12 | Vorschaltwiderstand |
| 13 | Diode |
| 14 | Knotenpunkt |
| 15 | Steuereingang |
| 16 | Regelvorrichtung |
| 17, 17' | Potentiometer |
| 18, 18' | Vorschaltwiderstand |
| 19, 19' | Diode |
| 20, 20' | Widerstand |
| 21, 21' | Spannungsteiler |
| 22, 22' | Triggertransistor |
| 23, 23' | Widerstand |
| 24, 24' | Widerstand |
| 25, 25' | Widerstand |

| | |
|---|---|
| 26, 26′ | Widerstand |
| 27, 27′ | Diode |
| 28, 28′ | Diode |
| 29, 29′ | Ladekondensator |
| 30, 30′ | IC-Chipbaustein |
| 31, 31′ | Ausgang |
| 32 | Steuereingang |
| 33 | Diode |
| 34 | Widerstand |
| 35 | Eingang |
| 36 | Regelvorrichtung |
| 37 | Schaltvorrichtung |
| 38 | Schalttransistor |
| 39 | Ausgangswiderstand |
| 40 | Diode |
| 41 | Spannungsteiler |
| 42 | Verzweigung |
| 43 | Tastschalter |
| 44 | Tastschalter |
| 45 | Widerstand |
| 46 | Widerstand |
| 47 | Widerstand |
| 48 | Nebenzweig |
| 49 | Widerstand |
| 50 | Widerstand |

| | |
|---|---|
| SENS = | Temperaturfühler |
| SET1, SET2, SET3 = | Einstellvorrichtung |
| COMP1, COMP2, COMP3 = | Komparator |
| OP1, OP2, OP3, OP4, OP5 = | Operationsverstärker |
| TRIG1, TRIG2, = | Triggerschaltung |
| TIMER1, TIMER2 = | Zeitglied |
| INV = | Inverter |
| HYS1, HYS2, HYS3 = | Rückkopplung |
| SW = | Schaltvorrichtung |

## Patentansprüche

1. Verfahren zur Erzeugung eines elektrischen Steuersignales zur Funktionssteuerung eines mit einem elektrisch beheizbaren Kessel und darin einem Rührwerk versehenen Aufbereitungsgerätes für medizinisch-therapeutische Packungsmassen, wie fango- und/oder paraffinhaltige Packungsmassen, mit folgenden Verfahrensschritten :

— Mittels eines in thermischen Kontakt mit der Kesselwandung angeordneten Temperaturfühlers (SENS) wird ein für die momentane Wandungstemperatur repräsentatives elektrisches Signal ($U_T$) erzeugt ;

— mittels einer Einstellvorrichtung (SET2 bzw. SET3) wird ein für eine gewünschte Funktionstemperatur ($T_{RF}$ bzw. $T_{ST}$) repräsentatives zweites elektrisches Signal ($U_{RF}$ bzw. $U_{ST}$) erzeugt ;

— ein als Zweipunktregler wirkender, gegebenenfalls mit einer Regelhysterese versehener Komparator (COMP2, COMP3) vergleicht die beiden vorgenannten elektrischen Signale ($U_T$ und $U_{RF}$ bzw. $U_{ST}$) und erzeugt ein Ausgangssignal, das als binäres Regelsignal ($U_H$) zur Ein- und Ausschaltsteuerung für die Heizung des Kessels dient, gekennzeichnet durch folgende Verfahrensschritte :

— Das sich von Schaltzyklus zu Schaltzyklus durch die thermische Wechselwirkung zwischen der Kesselwandung und der Packungsmasse im Kessel abhängig von dessen Füllmenge stetig verlängernde Ausschaltzeitintervall ($\Delta t_{aus}$) zwischen dem Ausschaltzeitpunkt ($t_{aus}$) und den darauffolgenden Wiedereinschaltzeitpunkt ($t_{ein}$) der Heizung wird in einem dem Komparatorausgang nachgeschalteten Zeitglied (TIMER1, TIMER2) mit einem eingeprägten, konstanten Gerätezeitintervall ($t_{app}$) verglichen und

— falls das Ausschaltzeitintervall ($\Delta t_{aus}$) das Gerätezeitintervall ($t_{app}$) überschreitet, wird am Ausgang des Zeitgliedes (TIMER1, TIMER2) das eingangs genannte elektrische Steuersignal zur Funktionssteuerung

10

des Aufbereitungsgerätes erzeugt.

2. Verfahren nach Anspruch 1 zur Erzeugung eines elektrischen Steuersignals zur Einschaltsteuerung für das Rührwerk, dadurch gekennzeichnet, daß mittels der Einstellvorrichtung (SET2) eine gegenüber der normalen Applikationstemperatur ($T_{AP}$) der Packungsmasse erhöhte Rührwerk-Einschalttemperatur ($T_{RF}$) eingestellt wird, auf die der Kessel bis zur Erzeugung des elektrischen Einschaltsteuersignales für das Rührwerk am Ausgang (31) des Zeitgliedes (TIMER1) eingeregelt wird.

3. Verfahren nach Anspruch 2, insbesondere zur Sicherung des Rührwerkes gegen einen Betrieb bei erstarrter Packungsmasse, dadurch gekennzeichnet, daß das elektrische Einschaltsteuersignal auf den Eingang des zugehörigen Komparators (COMP2) derart rückwirkt, daß die Rührwerk-Einschalttemperatur auf einen Wert ($T_{RF}'$) unterhalb der normalen Applikationstemperatur ($T_{AP}$) und etwas oberhalb der kritischen Erstarrungstemperatur der verwendeten Packungsmasse verschoben wird.

4. Verfahren nach Anspruch 3, dadurch gekennzeichnet, daß bei Unterschreiten der herabgesetzten Rührwerk-Einschalttemperatur ($T_{RF}'$) der Komparator (COMP2) an seinem Ausgang neuerlich ein Signal ($U_H$) zum Einschalten der Heizung erzeugt, das gleichzeitig das Zeitglied (TIMER1) in seinen Anfangszustand zurücksetzt mit der Folge, daß

— das Rührwerk durch ein entsprechendes Steuersignal am Ausgang (31) des Zeitgliedes (TIMER1) abgeschaltet,

— die Rückkopplung des Komparators (COMP2) zur Einstellung dessen Regelhysterese in den ursprünglichen Anfangszustand zurückgesetzt und

— damit die Kesseltemperatur neuerlich auf die erhöhte Rührwerk-Einschalttemperatur ($T_{RF}$) eingeregelt werden, wobei der Regel- und Steuerzyklus nach Anspruch 1 und 2 von neuem abläuft.

5. Verfahren nach Anspruch 1 zur Erzeugung eines elektrischen Steuersignals zur zeitlichen und thermischen Steuerung eines Sterilisationsprozesses für die Packungsmasse, dadurch gekennzeichnet, daß mittels der Einstellvorrichtung (SET3) eine gegenüber der normalen Applikationstemperatur ($T_{AP}$) wesentlich erhöhte Sterilisationstemperatur ($T_{ST}$) eingestellt wird, auf die die Kesseltemperatur bis zur Erzeugung des elektrischen Steuersignales am Ausgang (31') des Zeitgliedes (TIMER2) zur Beendigung des Sterilisationsvorganges eingeregelt wird.

6. Verfahren nach Anspruch 5, dadurch gekennzeichnet, daß das elektrische Steuersignal am Ausgang (31') des Zeitgliedes (TIMER2) auf eine eingangsseitige Schaltvorrichtung (37) der Regelvorrichtung (36) für den Sterilisationsprozeß rückgekoppelt wird, wodurch die Betriebsspannungsversorgung der Regelvorrichtung (36) mittels des elektrischen Steuersignales zur Beendigung des Sterilisationsprozesses abgeschaltet wird.

7. Verfahren nach Anspruch 5 oder 6, dadurch gekennzeichnet, daß das elektrische Steuersignal am Ausgang (31') des Zeitgliedes (TIMER2) zusätzlich als Steuersignal zur Einschaltsteuerung für das Rührwerk verwendet wird.

8. Aufbereitungsgerät für medizinisch-therapeutische Packungsmassen, insbesondere für fango- und/oder paraffinhaltige Packungsmassen, mit :

— einem Kessel zur Aufnahme der Packungsmasse,

— einer Heizung für den Kessel zur Aufbereitung der Packungsmasse,

— einem elektromotorisch angetriebenen Rührwerk im Kessel zur gleichmäßigen Durchmischung und schnellen Erwärmung der Packungsmasse und

— elektronischen Regelvorrichtungen (10, 16, 36) zur Ansteuerung der Heizung und des Rührwerkes mit

- - einem in thermischen Kontakt mit der Kesselwandung angeordneten Temperaturfühler (SENS) zur Erfassung der Kesselwandungstemperatur,

- - jeweils einer Sollwert-Einstellvorrichtung (SET1, SET2, SET3) für die einzuregelnde Applikations- ($T_{AP}$), Sterilisations- ($T_{ST}$) und/oder Rührwerk-Einschalttemperatur ($T_{RF}$),

- - jeweils mit den Ausgängen der Sollwert-Einstellvorrichtungen (SET1, SET2, SET3) und dem Ausgang des Temperaturfühlers (SENS) eingangsseitig verbundenen Komparatoren (COMP1, COMP2, COMP3), die als Zweipunktregler

- - - mittels eines Rückkopplungszweiges (HYS1, HYS2, HYS3) ein Hystereseschaltverhalten aufweisen,

- - - jeweils die der Applikations- ($T_{AP}$), Sterilisations- ($T_{ST}$) bzw. Rührwerk-Einschalttemperatur ($T_{RF}$) entsprechenden elektrischen Signalen ($U_{AP}$, $U_{ST}$ bzw. $U_{RF}$) mit dem der Kesselwandungstemperatur entsprechenden elektrischen Signal ($U_T$) vergleichen und

- - - an ihren mit dem Steuereingang (15) der Heizung verbundenen Ausgängen (Knotenpunkt 14) jeweils ein entsprechendes Steuersignal ($U_H$) zum Ein- und Ausschalten der Heizung erzeugen, gekennzeichnet durch folgende Merkmale :

Dem Ausgang des der Rührwerk-Einschaltsteuerung (Regelvorrichtung 16) und/oder des der Sterilisationsprozeßsteuerung (Regelvorrichtung 36) zugeordneten Komparators (COMP2 bzw. COMP3) ist jeweils ein Zeitglied (TIMER1 bzw. TIMER2) nachgeschaltet,

— mittels dem das sich von Schaltzyklus zu Schaltzyklus durch die thermische Wechselwirkung zwischen der Kesselwandung und der Packungsmasse im Kessel abhängig von deren Füllmenge stetig verlängernde Ausschaltzeitintervall ($\Delta t_{aus}$) zwischen dem Ausschaltzeitpunkt ($t_{aus}$) und dem Wiedereinschaltzeitpunkt ($t_{ein}$) mit einem eingeprägten, konstanten Gerätezeitintervall ($t_{app}$) vergleichbar ist und

— dessen mit einem entsprechenden Steuereingang (15 bzw. 32) einer Funktionseinheit des Aufbereitungsgerätes verbundener Ausgang (31, 31') entsprechend dem Ergebnis dieses Vergleichs mit einem repräsentativen Ausgangssignal beaufschlagbar ist.

9. Aufbereitungsgerät nach Anspruch 8, dadurch gekennzeichnet, daß zwischen den Ausgängen der Komparatoren (COMP2 bzw. COMP3) und den zugehörigen Zeitgliedern (TIMER1 bzw. TIMER2) eine Trigger-Schaltung (TRIG1 bzw. TRIG2) zum Starten, Stoppen und Rücksetzen der Zeitglieder (TIMER1 bzw. TIMER2) zwischengeschaltet ist.

10. Aufbereitungsgerät nach Anspruch 9, dadurch gekennzeichnet, daß die Trigger-Schaltung (TRIG1 bzw. TRIG2) aus einem dem Ausgang des jeweiligen Komparators (COMP2 bzw. COMP3) nachgeschalteten Spannungsteiler (21, 21') und einem basisseitig mit dessen Mittenabgriff verbundenen Triggertransistor (22, 22') besteht, der kollektorseitig mit dem Steuereingang des jeweiligen Zeitgliedes (TIMER1 bzw. TIMER2) verbunden ist.

11. Aufbereitungsgerät nach Anspruch 9 oder 10, dadurch gekennzeichnet, daß die Zeitglieder (TIMER1 bzw. TIMER2) jeweils als IC-Chipbausteine (30, 30') ausgebildet sind,

— denen ein entsprechendes Gerätezeitintervall ($t_{app}$) durch extern zugeschaltete Widerstände (23, 23', 25, 25') und Ladekondensatoren (29, 29') einprägbar ist und

— die durch aufeinanderfolgende Steuersignale an ihrem Steuereingang aktivierbar und deaktivierbar sind, wobei die Ausgänge (31, 31') der Zeitglieder (TIMER1 bzw. TIMER2) jeweils ein entsprechendes Signal erzeugen, falls die Zeitspanne ($\Delta t_{aus}$) zwischen den aufeinanderfolgenden Steuersignalen am Eingang größer ist als das eingeprägte Gerätezeitintervall.

12. Aufbereitungsgerät nach Anspruch 11, dadurch gekennzeichnet, daß die den Zeitgliedern (TIMER1 bzw. TIMER2) zugeordneten Ladekondensatoren (29, 29') über Entladewiderstände (24, 24') entladbar sind.

13. Aufbereitungsgerät nach einem der Ansprüche 8 bis 12, dadurch gekennzeichnet, daß der Ausgang (31) des Zeitgliedes (TIMER1), welches dem der Rührwerk-Einschaltsteuerung zugeordneten Komparator (COMP2) nachgeschaltet ist, mit dem Steuereingang (32) für den Antrieb des Rührwerkes verbunden ist.

14. Aufbereitungsgerät nach Anspruch 13, dadurch gekennzeichnet, daß der Ausgang des Zeitgliedes (TIMER1) über eine Diode (33) in Sperrichtung und einen Widerstand (34) elektrisch mit dem über einen weiteren Widerstand (20) rückgekoppelten Eingang des Komparators (COMP2) verbunden ist.

15. Aufbereitungsgerät nach einem der Ansprüche 8 bis 14, dadurch gekennzeichnet, daß die zumindest aus der Sollwert-Einstellvorrichtung (SET3) dem Komparator (COMP3) und dem Zeitglied (TIMER2) bestehende Regelvorrichtung (36) für die Ansteuerung der Heizung während des Sterilisationsprozesses eingangsseitig eine Schaltvorrichtung (37) zum externen Ein- und Ausschalten der Betriebsspannung aufweist, welche Schaltvorrichtung (37) mit

— einem als Differenzverstärker geschalteten Steuer-Operationsverstärker (OP5), der eingangsseitig über entsprechende Vorschaltwiderstände (45, 46, Spannungsteiler 41) mit der positiven bzw. negativen Betriebsspannung verbunden ist,

— einem Schalttransistor (38), dessen

- - Kollektor-Emitterstrecke dem Eingang der Sollwert-Einstellvorrichtung (SET3) sowie den Betriebsspannungsanschlüssen des Komparators (COMP3) und des Zeitgliedes (TIMER2) vorgeschaltet ist und

- - dessen Basisanschluß mit dem Ausgang des Steuer-Operationsverstärkers (OP5) verbunden ist und

— Tastschaltern (43, 44) zum manuellen, externen Ein- und Ausschalten der Betriebsspannung versehen ist, wobei der Ausgang des Zeitgliedes (TIMER2) zur automatisch gesteuerten Beendigung des Sterilisationsprozesses auf den einen Eingang des Steuer-Operationsverstärkers (OP5) rückgekoppelt ist.

16. Aufbereitungsgerät nach Anspruch 15, dadurch gekennzeichnet, daß der Ausgang (31') des Zeitgliedes (TIMER2) zusätzlich mit dem Steuereingang (32) für den Antrieb des Rührwerkes verbunden ist.

## Claims

1. Method for generating an electrical control signal for controlling the function of a preparation apparatus, which has an electrically heatable vessel and is provided therein with a stirrer, for medical/therapeutic pack matter, such as pack matter containing fango and/or paraffin, having the following process steps :

— an electrical signal ($U_T$) representative of the instantaneous wall temperature is generated by means of a temperature sensor (SENS) arranged in thermal contact with the vessel wall ;

— a second electrical signal ($U_{RF}$ or $U_{ST}$) representative of a desired function temperature ($T_{RF}$ or $T_{ST}$) is generated by means of a setting device (SET2 or SET3) ;

— a comparator (COMP2, COMP3) acting as two-position controller, possibly with a control hysteresis, compares the two aforesaid electrical signals ($U_T$ and $U_{RF}$ or $U_{ST}$) and generates an output signal which serves as binary control signal ($U_H$) for controlling switching-on and switching-off of the vessel heating means, characterized by the following process steps :

— the disconnection interval ($\Delta t_{aus}$), which constantly increases from switching cycle to switching cycle as a result of the thermal interaction between the vessel wall and the pack matter in the vessel depending on the filling level of the latter, between the disconnection time ($t_{aus}$) and the following reconnection time ($t_{ein}$) of the heating means is compared in a timing element (TIMER1, TIMER2) downstream of the comparator output with a programmed, constant apparatus interval ($t_{app}$), and

— if the disconnection interval ($\Delta t_{aus}$) exceeds the apparatus interval ($t_{app}$), the electrical control signal for controlling the function of the preparation apparatus mentioned at the beginning is generated at the output of the timing element (TIMER1, TIMER2).

2. Method according to Claim 1 for generating an electrical control signal for controlling the switching-on of the stirrer, characterized in that, by means of the setting device (SET2), an increased stirrer switch-on temperature ($T_{RF}$) with respect to normal application temperature ($T_{AP}$) of the pack matter is set, to which the vessel is regulated until the generation of the electrical switch-on control signal for the stirrer at the output (31) of the timing element (TIMER1).

3. Method according to Claim 2, in particular for protecting the stirrer from operating when the pack matter is solidified, characterized in that the electrical switch-on control signal is fed back into the input of the associated comparator (COMP2) in such a way that the stirrer switch-on temperature is shifted to a value ($T_{RF}$) below the normal application temperature ($T_{AP}$) and slightly above the critical solidification temperature of the pack matter used.

4. Method according to Claim 3, characterized in that when the temperature falls below the reduced stirrer switch-on temperature ($T_{RF}'$), the comparator (COMP2) once more generates at its output a signal ($U_H$) for switching on the heating means, which simultaneously resets the timing element (TIMER1) to its initial state, with the result that

— the stirrer is switched off by a corresponding control signal at the output (31) of the timing element (TIMER1),

— the feedback loop of the comparator (COMP2) for setting the control hysteresis thereof is reset to the original initial state, and

— the vessel temperature is thereby once more regulated to the increased stirrer switch-on temperature ($T_{RF}$), causing the closed-loop and open-loop control cycle according to Claim 1 and Claim 2 to commence anew.

5. Method according to Claim 1 for generating an electrical control signal for the temporal and thermal control of a sterilization process for the pack matter, characterized in that, by means of the setting device (SET3), a sterilization temperature ($T_{ST}$) considerably greater than the normal application temperature ($T_{AP}$) is set, to which the vessel temperature is regulated until the generation of the electrical control signal at the output (31') of the timing element (TIMER2) for terminating the sterilization operation.

6. Method according to Claim 5, characterized in that the electrical control signal at the output (31') of the timing element (TIMER2) is fed back to a switching device (37) on the input side of the closed-loop control device (36) for the sterilization process, as a result of which the operating voltage supply of the closed-loop control device (36) is switched off by means of the electrical control signal to terminate the sterilization process.

7. Method according to Claim 5 or 6, characterized in that the electrical control signal at the output (31') of the tiring element (TIMER2) is additionally used as control signal for controlling the switching-on of the stirrer.

8. Preparation apparatus for medical/therapeutic pack matter, in particular for pack matter containing fango/or paraffin, having :

— a vessel for receiving the pack matter,

— a heating means for the vessel for preparing the pack matter,

— an electromotively driven stirrer in the vessel for the even mixing through and rapid warming of the pack matter, and

— electronic closed-loop control devices (10, 16, 36) for controlling the heating means and the stirrer, having

- - a temperature sensor (SENS) arranged in thermal contact with the vessel wall for registering the vessel wall temperature,

- - in each case a setpoint setting device (SET1, SET2, SET3) for the application temperature ($T_{AP}$), sterilization temperature ($T_{ST}$) and/or stirrer switch-on temperature ($T_{RF}$) to be regulated,

13

-- comparators (COMP1, COMP2, COMP3) connected in each case to the outputs of the setpoint setting devices (SET1, SET2, SET3) and to the output of the temperature sensor (SENS) on the input side, which comparators, as two-position controllers,

--- exhibit a hysteresis switching behaviour by means of a feedback path (HYS1, HYS2, HYS3),

--- compare in each case the electrical signals ($U_{AP}$, $U_{ST}$ or $U_{RF}$) corresponding to the application temperature ($T_{AP}$), sterilization temperature ($T_{ST}$) or stirrer switch-on temperature ($T_{RF}$) with the electrical signal ($U_T$) corresponding to the vessel wall temperature, and

--- generate in each case a corresponding control signal ($U_H$) for switching the heating means on and off at their outputs (junction 14) connected to the control input (15) of the heating means, characterized by the following features :

downstream of the output of the comparator (COMP2 or COMP3) associated with the stirrer switch-on controller (closed-loop control device 16) and/or the sterilization process controller (closed-loop control device 36) is in each case a tiring element (TIMER1 or TIMER2),

— by means of which the disconnection interval ($\Delta t_{aus}$), which is continuously extended from switching cycle to switching cycle as a result of the thermal interaction between the vessel wall and the pack matter in the vessel depending on the filling level thereof, between the disconnection tire ($t_{aus}$) and the reconnection time ($t_{ein}$) can be compared with a programmed, constant apparatus interval ($t_{app}$), and

— the output (31, 31') of which, connected to a corresponding control input (15 or 32) of a function unit of the preparation apparatus, can receive a representative output signal depending on the result of this comparison.

9. Preparation apparatus according to Claim 8, characterized in that a trigger circuit (TRIG1 or TRIG2) for starting, stopping and resetting the timing elements (TIMER1 or TIMER2) is connected between the outputs of the comparators (COMP2 or COMP3) and the associated timing elements (TIMER1 or TIMER2).

10. Preparation apparatus according to Claim 9, characterized in that the trigger circuit (TRIG1 or TRIG2) consists of a voltage divider (21, 21') downstream of the output of the respective comparator (COMP2 or COMP3) and a trigger transistor, (22, 22') connected to the centre tap thereof on the base side, which is connected on the collector side to the control input of the respective tiring element (TIMER1 or TIMER2).

11. Preparation apparatus according to Claim 9 or 10 characterized in that the tiring elements (TIMER1 or TIMER2) are in each case designed as IC chip modules (30, 30'),

— which can be programmed with a corresponding apparatus interval ($t_{app}$) by externally connected resistors (23, 23', 25, 25') and charging capacitors (29, 29'), and

— which can be activated and deactivated by successive control signals at their control input, the outputs (31, 31') of the tiring elements (TIMER1 or TIMER2) in each case generating a corresponding signal if the time interval ($\Delta t_{aus}$) between the successive control signals at the input is greater than the programmed apparatus interval.

12. Preparation apparatus according to Claim 11, characterized in that the charging capacitors (29, 29') associated with the timing elements (TIMER1 or TIMER2) can be discharged via discharge resistors (24, 24').

13. Preparation apparatus according to one of Claims 8 to 12, characterized in that the output (31) of the timing element (TIMER1), which is downstream of the comparator (COMP2) associated with the stirrer switch-on controller, is connected to the control input (32) for driving the stirrer.

14. Preparation apparatus according to Claim 13, characterized in that the output of the timing element (TIMER1) is electrically connected via a diode (33) in blocking direction and a resistor (34) to the input of the comparator (COMP2) fed back via a further resistor (20).

15. Preparation apparatus according to one of Claims 8 to 14, characterized in that the closed-loop control device (36), comprising at least the setpoint setting device (SET3), the comparator (COMP3) and the timing element (TIMER2), has on the input side a switching device (37) for switching the operating voltage on and off externally for controlling the heating means during the sterilization process, which switching device (37) is provided with

— a control operational amplifier (OP5) connected as differential amplifier, which is connected on the input side via corresponding series resistors (45, 46, voltage divider 41) to the positive or negative operating voltage,

— a switching transistor (38),

-- the collector-emitter path of which is connected upstream of the input of the setpoint setting device (SET3) as well as the operating voltage terminals of the comparator (COMP3) and of the timing element (TIMER2), and

-- the base terminal of which is connected to the output of the control operational amplifier (OP5), and

— momentary-contact switches (43, 44) for manual, external switching on and off of the operating voltage, the output of the timing element (TIMER2) being fed back to one input of the control operational amplifier

EP 0 327 956 B1

(OP5) for the automatically controlled termination of the sterilization process.

16. Preparation apparatus according to Claim 15, characterized in that the output (31') of the timing element (TIMER 2) is additionally connected to the control input (32) for driving the stirrer.

## Revendications

1. Procédé pour générer un signal de commande électrique servant a commander le fonctionnement d'un appareil pour préparer des substances médicinales-thérapeutiques à appliquer en cataplasmes, telles que des substances contenant des boues thermales et/ou de la paraffine, appareil qui comporte une cuve susceptible d'être chauffée électriquement et un agitateur disposé dans cette cuve, comprenant les étapes de procédé suivantes :

— au moyen d'un capteur de température (SENS) disposé en contact thermique avec la paroi de la cuve, on génère un signal électrique ($U_T$) représentatif de la température instantanée de la paroi ;

— au moyen d'un dispositif d'ajustement (SET2 ou SET3), on génère un deuxième signal électrique ($U_{RF}$ ou $U_{ST}$) représentatif de la température de fonctionnement désirée ($T_{RF}$ ou $T_{ST}$) ;

— un comparateur (COMP2, COMP3), agissant comme un régulateur à deux positions et pourvu éventuellement d'une hystérésis de réglage, compare les deux signaux électriques précités ($U_T$ et $U_{RF}$ ou $U_{ST}$) et génère un signal de sortie qui sert en tant que signal binaire de réglage ($U_H$) pour la commande d'enclenchement et d'arrêt du chauffage de la cuve, caractérisé par les étapes de procédé suivantes :

— l'intervalle de temps d'arrêt ($\Delta t_{aus}$) entre l'instant d'arrêt ($t_{aus}$) et l'instant de réenclenchement ($t_{ein}$) consécutif du chauffage, intervalle qui se prolonge continûment d'un cycle de commutation (enclenchement-arrêt) au cycle de commutation suivant par suite de l'interaction thermique entre la paroi de la cuve et la substance dans la cuve, en fonction de la quantité de substance chargée sans celle-ci, est comparé avec un intervalle de temps d'appareil ($t_{app}$) imposé, constant, dans une minuterie (TIMER1, TIMER2) montée à la suite de la sortie du comparateur et

— au cas où l'intervalle de temps d'arrêt ($\Delta t_{aus}$) dépasse l'intervalle de temps d'appareil ($t_{app}$), le signal de commande électrique mentionné au début pour la commande du fonctionnement de l'appareil de préparation, est généré sur la sortie de la minuterie (TIMER1, TIMER2).

2. Procédé selon la revendication 1 pour générer un signal de commande électrique en vue de la commande de mise en marche de l'agitateur, caractérisé en ce que, au moyen du dispositif d'ajustement (SET2), on ajuste une température de mise en marche ($T_{RF}$) de l'agitateur augmentée par rapport à la température normale d'application ($T_{AP}$) de la substance, température augmentée sur laquelle est réglée la cuve jusqu'à la génération du signal de commande électrique de mise en marche de l'agitateur sur la sortie (31) de la minuterie (TIMER1).

3. Procédé selon la revendication 2, en particulier pour protéger l'agitateur contre son fonctionnement dans une substance solidifiée, caractérisé en ce que le signal de commande électrique de mise en marche agit en réaction sur l'entrée du comparateur correspondant (COMP2) de manière que la température de mise en marche de l'agitateur soit décalée à une valeur ($T_{RF'}$) qui est inférieure à la température normale d'application ($T_{AP}$) et légèrement supérieure à la température de solidification critique de la substance utilisée.

4. Procédé selon la revendication 3, caractérisé en ce que, lorsque la température descend au-dessous de la température te mise en marche réduite ($T_{RF'}$) de l'agitateur, le comparateur (COMP2) génère de nouveau, sur sa sortie, un signal ($U_H$) pour l'enclenchement du chauffage, signal qui produit en même temps la remise à l'état de départ de la minuterie (TIMER1), avec le résultat que

— l'agitateur est arrêté par un signal de commande adéquat sur la sortie (31) de la minuterie (TIMER1),

— le couplage de réaction du comparateur (COMP2) pour l'ajustement de l'hystérésis de réglage de celui-ci, est ramené a l'état de départ original et

— la température de la cuve est ainsi réglée de nouveau sur la température de mise en marche augmentée ($T_{RF}$) de l'agitateur, avec répétition du cycle de réglage et de commande selon les revendications 1 et 2.

5. Procédé selon la revendication 1 pour générer un signal de commande électrique servant à la commande temporelle et thermique d'un processus de stérilisation de la substance à appliquer en cataplasmes, caractérisé en ce que, au moyen du dispositif d'ajustement (SET3), on ajuste une température de stérilisation ($T_{ST}$) considérablement augmentée par rapport à la température d'application normale ($T_{AP}$) et sur laquelle est réglée la cuve jusqu'à la génération du signal de commande électrique sur la sortie (31') de la minuterie (TIMER2) pour l'arrêt du processus de stérilisation.

6. Procédé selon la revendication 5, caractérisé en ce que le signal de commande électrique sur la sortie (31') de la minuterie (TIMER2) est appliqué en réaction a un dispositif de commutation (37) prévu du côté de l'entrée du dispositif de réglage (36) pour le processus de stérilisation, avec le résultat que l'alimentation en tension de service du dispositif de réglage (36) est coupée au moyen du signal de commande électrique pour l'arrêt du processus de stérilisation.

7. Procédé selon la revendication 5 ou 6, caractérisé en ce que le signal de commande électrique sur la sortie (31') de la minuterie (TIMER2) est utilisé en plus comme signal de commande pour la commande de mise en marche de l'agitateur.

8. Appareil pour préparer des substances médicinales-thérapeutiques à appliquer en cataplasmes, en particulier des substances contenant des boues thermales et/ou de la paraffine, comprenant :
— une cuve destinée à recevoir la substance à appliquer en cataplasmes,
— un chauffage pour la cuve en vue de la préparation de la substance,
— un agitateur, entraîné par un moteur électrique, qui est disposé dans la cuve pour le mélange uniforme et le chauffage rapide de la substance et
— des dispositifs de réglage électroniques (10, 16, 36) destinés à piloter le chauffage et l'agitateur et comportant
- - un capteur de température (SENS) disposé en contact thermique avec la paroi de la cuve et servant à détecter la température de cette paroi,
- - un dispositif d'ajustement de la valeur de consigne (SET1, SET2, SET3) pour chacune des températures, d'application ($T_{AP}$), de stérilisation ($T_{ST}$) et/ou de mise en marche de l'agitateur ($T_{RF}$) à régler,
- - des comparateurs (COMP1, COMP2, COMP3), reliés respectivement par leurs entrées aux sorties des dispositifs d'ajustement de la valeur de consigne (SET1, SET2, SET3) et à la sortie du capteur de température (SENS), comparateurs qui, en tant que régulateurs à deux positions,
- - - sont dotés, au moyen d'un circuit de couplage en réaction (HYS1, HYS2, HYS3), d'un comportement de commutation à hystérésis,
- - - comparent les signaux électriques ($U_{AP}$, $U_{ST}$ ou $U_{RF}$), correspondant respectivement à la température d'application ($T_{AP}$), de stérilisation ($T_{ST}$) ou de mise en marche ($T_{RF}$) de l'agitateur, avec le signal électrique ($U_T$) correspondant à la température de la paroi de la cuve et
- - - génèrent à leurs sorties (noeud 14) reliées à l'entrée de commande (15) du chauffage, un signal de commande ($U_H$) correspondant pour l'enclenchement et l'arrêt du chauffage, caractérisé en ce que :
une minuterie (TIMER1 ou TIMER2) est montée a la suite de la sortie du comparateur (COMP2 ou COMP3) coordonné à la commande pour la mise en marche de l'agitateur (dispositif de réglage 16) et/ou à ta commande pour te processus de stérilisation (dispositif de réglage 36), minuterie
— au moyen de laquelle l'intervalle de temps d'arrêt ($\Delta t_{aus}$) entre l'instant d'arrêt ($t_{aus}$) et l'instant de réenclenchement ($t_{ein}$), intervalle qui se prolonge continûment d'un cycle de commutation (enclenchement-arrêt) au cycle de commutation suivant, par suite de l'interaction thermique entre la paroi de ta cuve et la substance dans ta cuve, en fonction de la quantité de substance chargée dans la cuve, peut être comparé avec un intervalle de temps d'appareil ($t_{app}$) impose, constant, et
— à la sortie (31, 31') de laquelle peut être appliqué, en fonction du résultat de cette comparaison, un signal de sortie représentatif, ladite sortie étant reliée a une entrée de commande (15 ou 32) correspondante d'un ensemble fonctionnel de l'appareil de préparation.

9. Appareil de préparation selon la revendication 8, caractérisé en ce qu'un circuit de déclenchement (TRIG1 ou TRIG2) pour faire démarrer, arrêter et réarmer les minuteries (TIMER1 et TIMER2), est connecté entre les sorties des comparateurs (COMP2 et COMP3) et les minuteries (TIMER1 et TIMER2) correspondantes.

10. Appareil de préparation selon la revendication 9, caractérisé en ce que le circuit de déclenchement (TRIG1 ou TRIG2) est constitué d'un diviseur de tension (21, 21') prévu a ta suite de la sortie du comparateur (COMP2 ou COMP3) concerné, ainsi que d'un transistor de déclenchement (22, 22') dont la base est connectée a la prise médiane du diviseur de tension et dont le collecteur est connecté à l'entrée de commande de la minuterie (TIMER1 ou TIMER2) coordonnée.

11. Appareil de préparation selon la revendication 9 ou 10, caractérisé en ce que les minuteries (TIMER1 et TIMER2) sont réalisées chacune sous la forme d'une puce ou circuit intégré (30, 30'),
— auquel peut être imposé un intervalle de temps d'appareil ($t_{app}$) par des résistances (23, 23', 25, 25') et des condensateurs (29, 29') montés à l'extérieur et
— qui peut être activé et désactivé par des signaux de commande successifs appliqués à son entrée de commande, les sorties (31, 31') des minuteries (TIMER1 et TIMER2) générant chaque fois un signal correspondant au cas où le laps de temps ($\Delta t_{aus}$) entre les signaux de commande successifs a l'entrée est plus grand que l'intervalle de temps d'appareil imposé.

12. Appareil de préparation selon la revendication 11, caractérisé en ce que les condensateurs (29, 29') coordonnés aux minuteries (TIMER1 et TIMER2) peuvent être déchargés à travers des résistances de décharge (24, 24').

13. Appareil de préparation selon une des revendications 8 à 12, caractérisé en ce que la sortie (31) de la minuterie (TIMER1) montée à la suite du comparateur (COMP2) coordonné à la commande de mise en marche de l'agitateur, est connectée à l'entrée de commande (32) pour l'entraînement de l'agitateur.

14. Appareil de préparation selon la revendication 13, caractérisé en ce que la sortie de la minuterie (TIMER1) est reliée électriquement, à travers une diode (33) montée dans le sens du blocage et à travers une résistance (34), à l'entrée du comparateur (COMP2) qui est couplée en réaction à travers une autre résistance (20)

15. Appareil de préparation selon une des revendications 8 à 14, caractérisé en ce que le dispositif de réglage (36) pour le pilotage du chauffage pendant le processus de stérilisation, dispositif qui se compose au moins d'un dispositif d'ajustement de valeur de consigne (SET3), d'un comparateur (COMP3) et d'une minuterie (TIMER 2), comporte, du côté de l'entrée, un dispositif de commutation (37) destiné a appliquer et à couper la tension d'alimentation de l'extérieur, dispositif de commutation (37) qui est équipé

— d'un amplificateur opérationnel de commande (OP5), monté en amplificateur différenciateur et connecté côté entrée à travers des résistances d'entrée adéquates (45, 46, diviseur de tension 41) aux bornes positive et négative de la tension de service,

— d'un transistor de commutation (38) dont

- - le circuit collecteur-émetteur est connecté en amont de l'entrée du dispositif d'ajustement de la valeur de consigne (SET3), ainsi que des bornes de raccordement de la tension de service du comparateur (COMP3) et de la minuterie (TIMER2) et

- - dont la connexion de base est reliée à la sortie de l'amplificateur opérationnel de commande (OP5), de même que

— d'interrupteurs à bouton-poussoir (43, 44) pour l'application et la coupure manuelles de l'extérieur de la tension de service, la sortie de la minuterie (TIMER2) étant couplée en réaction a l'une des entrées de l'amplificateur opérationnel de commande (OP5) en vue de l'arrêt automatique du processus de stérilisation.

16. Appareil de préparation selon la revendication 15, caractérisé en ce que la sortie (31') de la minuterie (TIMER2) est reliée en outre à l'entrée de commande (32) pour l'entraînement de l'agitateur.

FIG. 1

FIG.2

FIG.3

EP 0 327 956 B1

FIG.4